# EUROPEAN PATENT APPLICATION

(11) **EP 4 414 053 A1**
(43) Date of publication of application: **14.08.2024**
(21) Application number: 24154643.1
(22) Date of filing: 30.01.2024
(51) Int. Cl.: B01D 53/94, B01J 21/06, B01J 21/10, B01J 23/40, B01J 23/44, B01J 23/58, B01J 27/053, B01J 23/63, B01J 35/56, B01J 37/02, B01J 23/02, B01J 37/00

(54) **IMPROVED SULFUR-CONTAINING ORGANIC COMPOUND ASSISTED METAL NANOPARTICLE SYNTHESIS FOR THREE-WAY CATALYSIS APPLICATION**

(30) Priority: 13.02.2023 US 202363484560 P; 05.09.2023 US 202363580446 P
(71) Applicant: Johnson Matthey Public Limited Company, London EC4A 4AB (GB)
(72) Inventor: LIU, Dongxia, Wayne, 19087 (US)
(74) Representative: Boult Wade Tennant LLP

(57) **Abstract**

Provided is a method of manufacturing an alkaline-earth-metal-sulfate-loaded support material, the method comprising: providing a first slurry comprising a support material, alkaline-earth-metal ions and an organic compound, wherein the organic compound comprises a functional group selected from a sulfo group (-SO₃H), a sulfonyl group (-S(=O)₂-) and a sulfinyl group (-S(=O)-); spray drying the first slurry to provide a spray-dried powder; and heating the spray-dried powder to form an alkaline-earth-metal-sulfate-loaded support material.

## Description

### FIELD OF THE INVENTION

The invention relates to a method of manufacturing an alkaline-earth-metal-sulfate-loaded support material, an alkaline-earth-metal-sulfate-loaded support material, a method of manufacturing a catalyst article, catalyst articles, an emission treatment system and a method of treating an exhaust gas.

### BACKGROUND OF THE INVENTION

A three-way catalyst (TWC) allows simultaneous conversions (-98%) of CO, HCs and NOₓ from gasoline engine exhaust to innocuous compounds at stoichiometric air-to-fuel ratio. Specifically, the oxidation of CO and HCs to CO₂ and steam (H₂O) is mainly catalyzed by Pd, while the reduction of NOₓ to N₂ is mainly catalyzed by Rh. Modern TWCs use supported platinum group metal (hereinafter "PGM") catalysts (Pd, Rh, Pt, *etc.*) deposited on a single, double or multilayer support, with the support material consisting of metal oxides with high specific surface area, primarily stabilized gamma alumina and ceria-containing oxygen storage materials. The supported catalyst is washcoated on a ceramic monolithic substrate.

Conventional preparation of a TWC washcoat slurry generally involves the use of a solution of an inorganic PGM precursor, e.g. nitrate, acetate, hydroxide or chloride salt, to allow the PGM element to be deposited onto the oxide support via incipient wetness or wet impregnation. Promoter salts are also often added to the washcoat formulations for enhanced TWC performance. Once the monolithic substrate is washcoated with the as-prepared slurry, drying and calcination steps are followed to decompose the inorganic salts and to allow PGM and promoter elements to be fixed onto the support materials. Conventional TWCs prepared using the above method often provide only limited control over the properties of the catalytically active species (*i.e.* average particle size of PGM and promoters, affiliation of these active components with the targeted support materials, and distribution of these active components within the same washcoat ("WC") layer for improved metal-support interactions). This is mainly due to the migration and grain growth during drying and high-temperature calcination processes.

Alkaline earth metals, such as barium, are well known to be excellent promoters for Pd's catalytic functions. Ba can donate electrons to Pd, making the electron configuration of Pd^{(II)} more like Rh, and thus can improve the TWC activity [NON-PATENT DOCUMENT 1]. Both NOₓ and CO adsorption intensity on Pd is reduced on Ba-promoted Pd catalysts, resulting in enhanced NOₓ and CO conversion [NON-PATENT DOCUMENT 2; NON-PATENT DOCUMENT 3]. Ba also helps to stabilize PdO and suppress the sintering due to the high-temperature exposure in the lifetime usage of a three-way catalytic converter. Last but not least, Ba is a good stabilizer for the alumina support material, which helps to maintain the high dispersion of Pd species.

When using a Ba component as an additive, it is important to control the locations and size of both palladium and barium for optimizing the synergistic interactions with the active Pd, the Ba species, and support components. However, in catalysts obtained from known methods, due to the generally larger particle sizes of the alkaline-earth-metal-containing species compared to the Pd nanoparticles, the interaction may not be optimized. Moreover, this interaction may deteriorate on ageing in the catalysts obtained from known methods. Accordingly, there is a need to provide a method of manufacturing a catalyst article that enables a more optimized interaction between the PGM (Such as Pd) nanoparticles and the alkaline-earth-metal-containing species in the obtained catalyst article, ideally with equivalent particle size and intimate proximity, which enables such an improved performance and also less susceptible to ageing.

Soluble alkaline-earth-metal species and Pd precursor tent to migrate to the washcoat layer surface during the drying step after dosing, owning to the capillary effect. In this case, Ba component and Pd species are not evenly distributed within the washcoat layer, resulting in sub-optimal interaction between Ba/Pd species and the metal oxide support materials. Significant grain growth of Pd and Ba species occurs during the typical TWC ageing due to the high temperature, which deteriorates Pd-Ba interaction and leads to the deactivation of TWC catalysts. Sub-optimal metal-support interaction would accelerate this grain growth and further diminish the catalytic performance. Thus, increasing the homogeneity of the Pd nanoparticles and the alkaline-earth-metal-containing species of the washcoat layer is as equally critical as similarly small particle size of both, which enables more resistance to TWC ageing due to optimal metal - support interaction.

A significant amount of effort has been made historically trying to reduce the particle size of barium species to facilitate a closer contact with Pd species and control the Barium species location within the washcoat using some insoluble Ba compounds. Ball/bead milling of the BaSO₄ compound is less effective to make nano-scale barium sulfate species [PATENT DOCUMENT 1; PATENT DOCUMENT 6]. Sulfuric acid was added to the Pd washcoat with Ba acetate or Ba hydroxide as a precursor in order to generate a barium sulfate species during the calcination step. A smaller BaSO₄ particle size was obtained; however, it is still on the micron level, far away from nano-scale target [PATENT DOCUMENTS 2 to 5].

### CITATION LIST:

### Patent document:

PATENT DOCUMENT 1: US8741799
PATENT DOCUMENT 2: US20120165185
PATENT DOCUMENT 3: US8545780
PATENT DOCUMENT 4: US8835346
PATENT DOCUMENT 5: 20140329669
PATENT DOCUMENT 6: WO2014156746

### Non-patent document:

NON-PATENT DOCUMENT 1: Applied Catalyst B, 30, 2001, 287
NON-PATENT DOCUMENT 2: Journal of Molecular Catalysis A: Chemical, 349, 2011, 94
NON-PATENT DOCUMENT 3: Applied Catalysis A: General 403, 2011, 12

### SUMMARY OF THE INVENTION

One aspect of the present disclosure is directed to a method of manufacturing an alkaline-earth-metal-sulfate-loaded support material, the method comprising: providing a first slurry comprising a support material, alkaline-earth-metal ions and an organic compound, wherein the organic compound comprises a functional group selected from a sulfo group (-SO₃H), a sulfonyl group (-S(=O)₂-) and a sulfinyl group (-S(=O)-); spray drying the first slurry to provide a spray-dried powder; and heating the spray-dried powder to form an alkaline-earth-metal-sulfate-loaded support material.

Another aspect of the present disclosure is directed to an alkaline-earth-metal-sulfate-loaded support material obtained or obtainable by the method of the above aspect.

Another aspect of the present disclosure is directed to a method of manufacturing a catalyst article, the method comprising: manufacturing an alkaline-earth-metal-sulfate-loaded support material according to the method of the above aspect or providing an alkaline-earth-metal-sulfate-loaded support material according to the above aspect; providing a second slurry comprising the alkaline-earth-metal-sulfate-loaded support material and platinum group metal ("PGM") ions; disposing the second slurry on a substrate; and heating the slurry to form PGM nanoparticles on the alkaline-earth-metal-sulfate-loaded support material.

Another aspect of the present disclosure is directed to a catalyst article obtained or obtainable by the method of the above aspect.

Another aspect of the present disclosure is directed to a catalyst article comprising: a substrate; and a first catalytic region disposed on the substrate; wherein the first catalytic region comprises a support material having loaded thereon PGM nanoparticles and alkaline-earth-metal-sulfate nanoparticles; wherein the alkaline-earth-metal-sulfate nanoparticles are evenly distributed within the first catalytic region.

Another aspect of the present disclosure is directed to an emission treatment system comprising the catalyst article of the above aspect.

Another aspect of the present disclosure is directed to a method of treating an exhaust gas, the method comprising: providing the catalyst article of the above aspect; and contacting the catalyst article with an exhaust gas.

### BRIEF DESCRIPTION OF THE DRAWINGS

The invention will now be described in relation to the following non-limiting drawings in which:

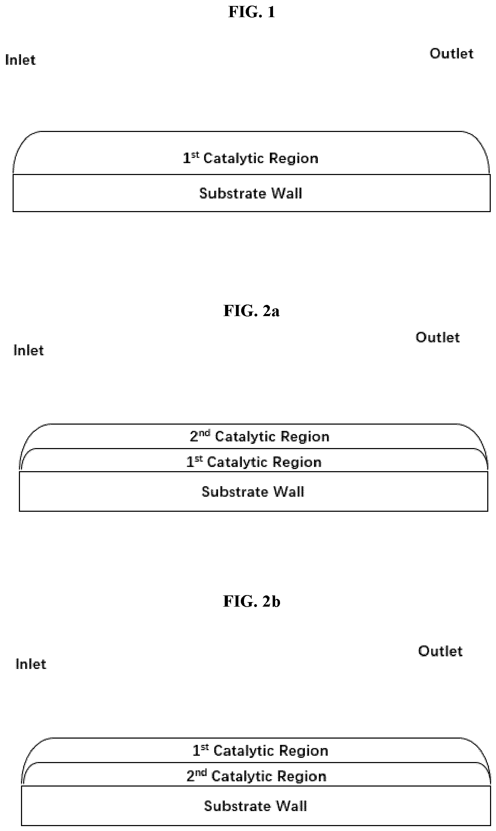

**FIG. 1** shows one embodiment according to the present invention, which contains first catalytic region with a length of 100% to the axial length L of the substrate (single layer).
**FIG. 2a** shows one embodiment according to the present invention, the first catalytic region extends 100% of the axial length L, as bottom layer; the second catalytic region extends 100% of the axial length L, as top layer. **FIG. 2b** depicts a variation of **FIG. 2a.**

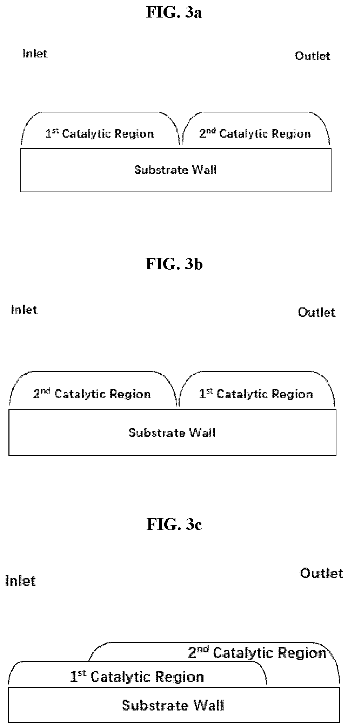

**FIG. 3a** shows one embodiment according to the present invention, the first catalytic region extends less than 100% of the axial length L, from the inlet end; the second catalytic region extends less than 100% of the axial length L, from the outlet end. The total length of the second and the first catalytic region is equal or less than the axial length L. **FIG. 3b** depicts a variation of **FIG. 3a****.**

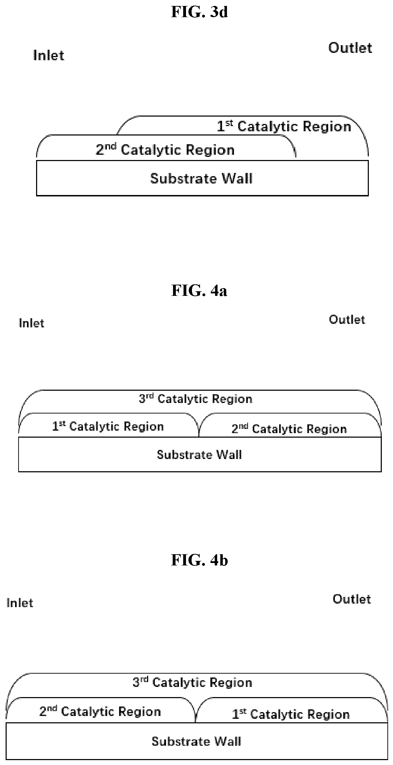

**FIG. 3c** shows one embodiment according to the present invention, the first catalytic region extends less than 100% of the axial length L, from the inlet end; the second catalytic region extends less than 100% of the axial length L, from the outlet end. The total length of the second and the first catalytic region is greater than the axial length L. **FIG. 3d** depicts a variation of **FIG. 3c****.**
**FIG. 4a** shows one embodiment according to the present invention, the first catalytic region extends less than 100% of the axial length L, from the inlet end; the second catalytic region extends less than 100% of the axial length L, from the outlet end. The total length of the second and the first catalytic region is less than or equal to the axial length L. The 3^{rd} catalytic region extends 100% of the axial length L and overlies the first and second catalytic regions as top layer. **FIG. 4b** depicts a variation of **FIG. 4a****.**

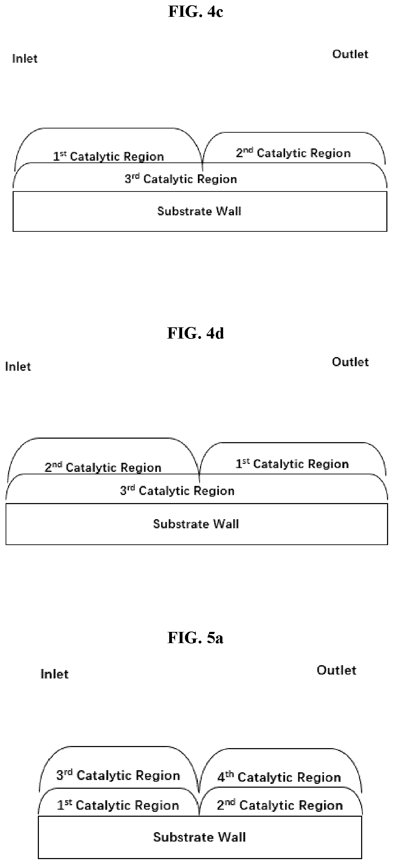

**FIG. 4c** shows one embodiment according to the present invention, the 3^{rd} catalytic region extends 100% of the axial length L as bottom layer. The first catalytic region extends less than 100% of the axial length L, from the inlet end; the second catalytic region extends less than 100% of the axial length L, from the outlet end. The total length of the second and the first catalytic region is less than or equal to the axial length L. **FIG. 4d** depicts a variation of **FIG. 4c****.**

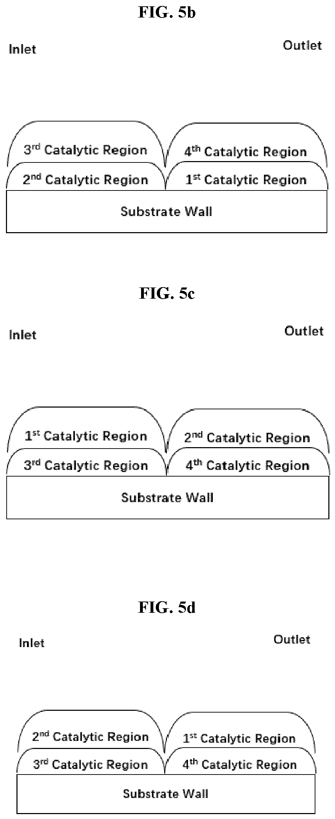

**FIG. 5a** shows one embodiment according to the present invention, the first catalytic region extends less than 100% of the axial length L, from the inlet end; the second catalytic region extends less than 100% of the axial length L, from the outlet end. The total length of the second and the first catalytic region can be less than, equal to, or greater than the axial length L. The third catalytic region extends less than 100% of the axial length L, from the inlet end; the fourth catalytic region extends less than 100% of the axial length L, from the outlet end. The total length of the third and the fourth catalytic region can be less than, equal to, or greater than the axial length L. The first and second catalytic regions constitutes bottom layer; and the third and fourth catalytic regions constitutes top layer. **FIGs. 5b, 5c,** and **5d** depict variations of **FIG. 5a****.**

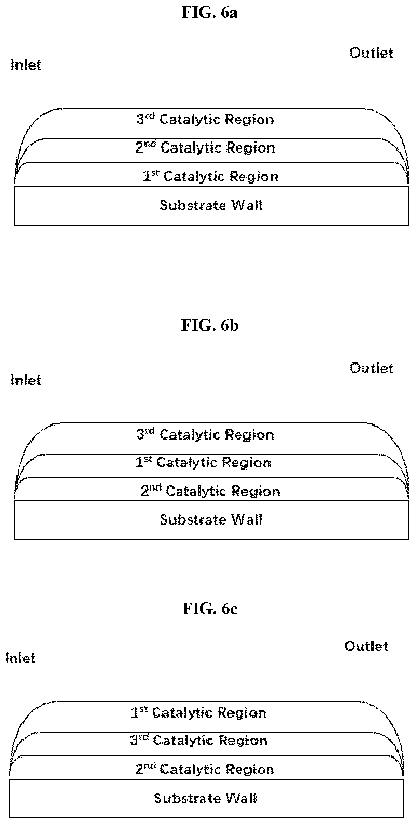

**FIG. 6**a shows one embodiment according to the present invention, the first catalytic region extends 100% of the axial length L, as bottom layer; the second catalytic region extends 100% of the axial length L, as middle layer; and the third catalytic region extends 100% of the axial length L, as top layer. **FIG. 6b** and **6c** depict variations of **FIG. 6a****.**

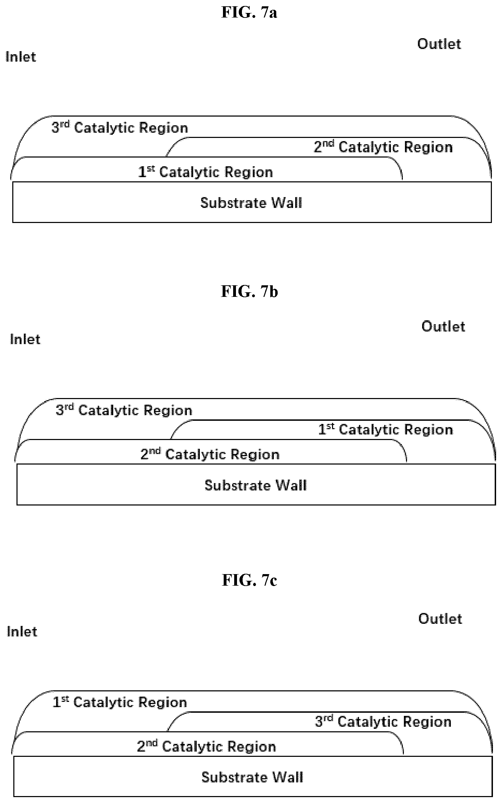

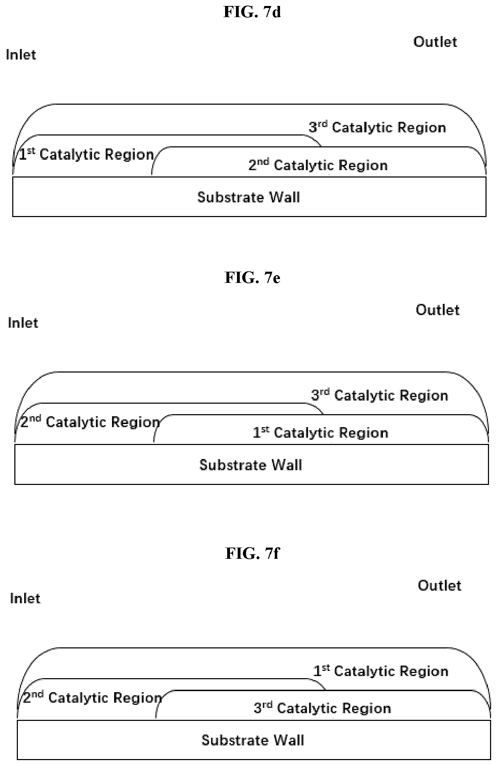

**FIG. 7a** shows one embodiment according to the present invention, the first catalytic region extends less than 100% of the axial length L, from the inlet end; the second catalytic region extends less than 100% of the axial length L, from the outlet end. The total length of the second and the first catalytic region is greater than the axial length L. The 3^{rd} catalytic region extends 100% of the axial length L and overlies the first and second catalytic regions as top layer. **FIGs. 7b-7f** depict variations of **FIG. 7a****.**

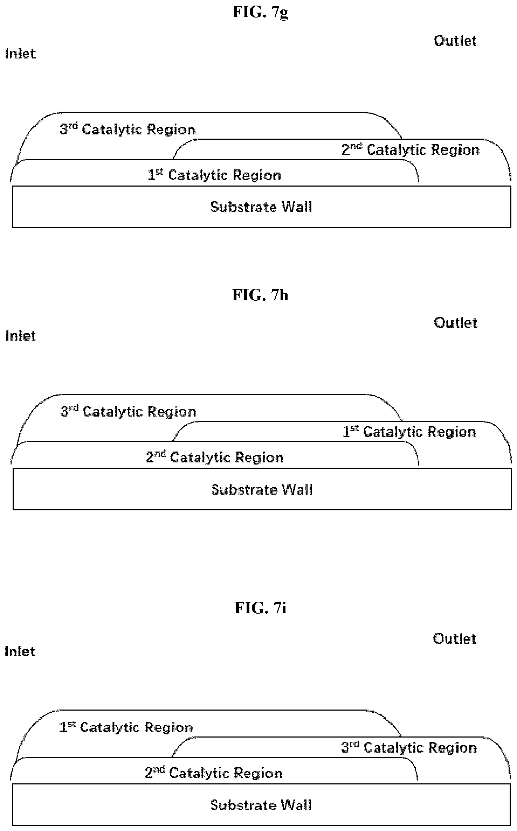

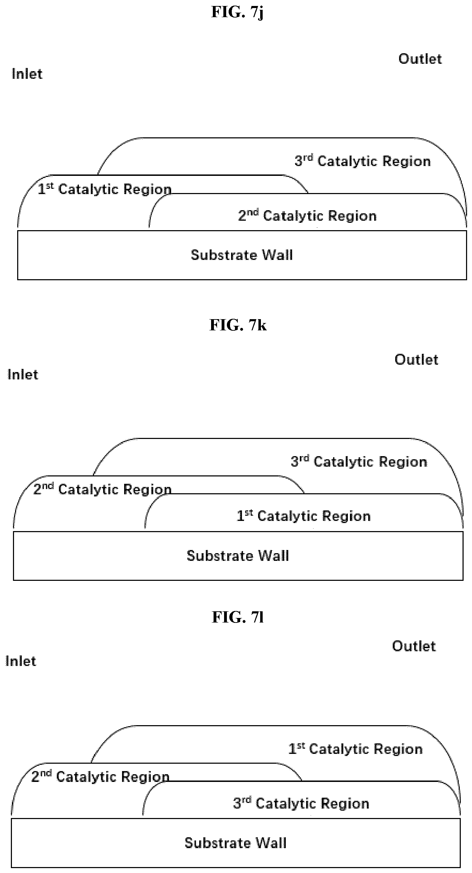

**FIG. 7g** shows one embodiment according to the present invention, the first catalytic region extends less than 100% of the axial length L, from the inlet end; the second catalytic region extends less than 100% of the axial length L, from the outlet end. The total length of the second and the first catalytic region can be less than, equal to, or greater than the axial length L. The 3^{rd} catalytic region extends less than 100% of the axial length L from the inlet end and at least partially overlies the first and/or second catalytic regions. **FIGs. 7h** and **7i** depict variations of **FIG. 7g****.** **FIG. 7j** shows one embodiment according to the present invention, the first catalytic region extends less than 100% of the axial length L, from the inlet end; the second catalytic region extends less than 100% of the axial length L, from the outlet end. The total length of the second and the first catalytic region can be less than, equal to, or greater than the axial length L. The 3^{rd} catalytic region extends less than 100% of the axial length L from the outlet end and at least partially overlies the second and/or first catalytic regions. **FIGs. 7k** and **7l** depict variations of **FIG. 7j****.**

### DETAILED DESCRIPTION OF THE INVENTION

The present invention seeks to tackle at least some of the problems associated with the prior art or at least to provide a commercially acceptable alternative solution thereto.

In a first aspect, the present invention provides a method of manufacturing an alkaline-earth-metal-sulfate-loaded support material, the method comprising: providing a first slurry comprising a support material, alkaline-earth-metal ions and an organic compound, wherein the organic compound comprises a functional group selected from a sulfo group (-SO₃H), a sulfonyl group (-S(=O)₂-) and a sulfinyl group (-S(=O)-); spray drying the first slurry to provide a spray-dried powder; and heating the spray-dried powder to form an alkaline-earth-metal-sulfate-loaded support material.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, when an alkaline-earth-metal-sulfate-loaded support material manufactured by the method of the invention is used as a support material for PGMs (such as Pd) in a catalytic region, such as a washcoat layer, of a catalyst article, the catalyst article may provide favourable catalytic activity when used in an emission treatment system, in particular for three-way catalytic activity. For example, the catalyst article may exhibit favourable light-off performance, in particular conversions of NO, CO and total hydrocarbons, during three-way catalytic emissions abatement for a stoichiometric gasoline engine. Such favourable catalytic activity and light-off performance may be superior to that exhibited by conventional catalyst articles with the same/similar PGM specie(s), loading(s), support(s), and configuration(s). The catalyst article may be more durable in comparison to conventional catalyst articles. In other words, such favourable catalytic activity may be exhibited even after aging.

Advantageously, such superior performance may facilitate the use of lower loadings of PGMs and/or promoter metals (such as alkaline earth metals) in comparison to conventional catalyst articles without compromising catalytic performance. This may be beneficial in view of the high cost of such metals, such as palladium. Furthermore, such superior performance may facilitate the partial/complete substitution of high cost PGMs with lower cost PGMs or other transition metals without compromising catalytic performance.

As described herein, the PGM (including the PGM nanoparticles) throughout the description can be Pt, Pt, and/or Rh. In some embodiments, the PGM can comprise Pd. In other embodiments, the PGM can comprise Pt and/or Rh. In certain embodiments, the PGM can comprise Pd and Rh or Pd and Pt. In other embodiments, the PGM can comprise Pd, Pt, and Rh. In some embodiment, the PGM can be Pd only.

Moreover, such a catalyst article may provide surprisingly efficient TWC performance in the "cold start" conditions. This is because the promoter-interaction of the alkaline earth metal, such as barium, and the palladium, if present, may be particularly effective in such catalyst articles.

Without wishing to be bound by theory, it is hypothesised that such superior performance may be provided by a favourable nano-scale particle size of the alkaline-earth-metal sulfate, which may comprise nanoparticles loaded on the support material, which have been provided by the method of this aspect via the organic-compound route. This may be because it is thought that the formation rate of alkaline-earth-metal sulfate is relatively slow with the presence of organic compound during the calcination stage, resulting nano-scale particle size of the alkaline-earth-metal sulfate. Such a small particle size may be favourable in interaction with PGM, preferably palladium, particle size distributions that may be loaded onto the support material for use in a catalyst article. Such a resulting catalyst article may also exhibit a favourable distribution of the PGM or palladium nanoparticles and the nanoparticles of the sulfate of the alkaline earth metal relative to one another, i.e. have a high correlation with one other (in other words, having a high number of palladium - alkaline earth metal interactions by, *inter alia* having small particle sizes and highly evenly distributed nanoparticles, i.e. a distribution of palladium nanoparticles and the nanoparticles of the sulfate of the alkaline earth metal having high homogeneity).

Without wishing to be bound by theory, it is hypothesised that the method of the present invention, wherein the slurry that is provided in the method comprises alkaline-earth-metal ions and the organic compound described herein and wherein the slurry is then spray dried, may help to enable smaller particles sizes and even distribution of the alkaline-earth-metal sulfate to be loaded on the support material.

Moreover, without wishing to be bound by theory it is hypothesised that such a method may enable the particle sizes of the PGM (such as Pd) and the alkaline-earth-metal sulfate, once the PGM (such as Pd) is loaded onto the support material, to be comparable, i.e. of similar magnitude. Typically, in conventional methods, the alkaline earth metal sulfate nanoparticles may be up to 5, 10 or even 20 times greater than the PGM (such as Pd) nanoparticles. In the methods of the present invention, since it may be possible to obtain small nanoparticles of the alkaline-earth-metal sulfate, the interaction and correlation between the PGM (such as Pd) and the alkaline earth metal may be high once the PGM (such as Pd) nanoparticles are added. This is because the nanoparticles may therefore be able to sit closely next to one another on the support material (if distributed evenly, for example), and enter the same sized pores in the support material, for example. Thus, a highly uniform distribution of the similarly-sized particles may be provided. This may enable the above-described advantageous effects to be achieved, by optimising the possibility for interaction between the PGM (such as Pd) and the alkaline earth metal promotor species.

Without wishing to be bound by theory, it is also thought that such a distribution of resulting nanoparticles of the alkaline-earth-metal sulfate may help to achieve advantageous ageing properties, i.e. increased resistance to deactivation on ageing (e.g. of cold start emission control activity), particularly once PGM or palladium nanoparticles may be loaded thereon. This may be because due to the more even distribution of small nanoparticles that may be formed, i.e. having a relatively high number of direct PGM or palladium to alkaline earth metal interactions and a relatively low number of direct PGM to PGM and direct alkaline earth metal to alkaline earth metal interactions (i.e. with reference to neighbouring nanoparticles), on ageing such a catalyst article may be more resistant to sintering/coalescing of the particles of the same species to form larger nanoparticles thereof, thereby being deactivated. This may be due to the highly even distribution of particles enabling the nanoparticles of the "other" species to act as a physical barrier to the sintering/coalescing of nanoparticles of the same species, for example. Thus, advantageously, a catalyst article having a higher resistance to deactivation on ageing may be provided. In other words, this may be possible because the alkaline-earth-metal sulfate nanoparticles may be small and evenly distributed on the support material when provided by the method of the present aspect. Thereafter, once PGM or palladium nanoparticles are loaded thereon, the PGM or palladium nanoparticles may be of a similar particle size distribution and be distributed evenly amongst the similarly-sized alkaline-earth-metal nanoparticles.

A further advantage may be that *in situ* alkaline-earth-metal sulfate (such as BaSO₄) may form during the calcination stage of this method, utilizing the pores of the support material (particularly for lanthanum-doped alumina) so that the growth of the alkaline-earth-metal sulfate crystals is limited.

Perhaps most importantly, it has surprisingly been found that by first providing an alkaline-earth-metal-sulfate-loaded support material by the method of the present invention, and then using said alkaline-earth-metal-sulfate-loaded support material in the preparation of a catalytic region, such as a washcoat, of a catalyst article, for example by, *inter alia,* loading a PGM or, specifically, palladium, thereon, a catalyst article can be prepared that may exhibit the above-described advantageous effects and in which the alkaline-earth-metal sulfate (nanoparticles) is evenly distributed in the catalytic region or washcoat. The even distribution may also increase the catalytic performance of the catalyst article. In other words, the advantageous effects that may be achieved by the favourable particle size distribution of the alkaline-earth-metal sulfate may be achieved when the alkaline-earth-metal-sulfate-loaded support material of the invention is used in a catalytic region of a catalyst article, while also maintaining an even distribution of the alkaline-earth-metal sulfate in the catalytic region itself.

This is in contrast to a method of manufacturing a catalyst article in which, for example, a slurry is washcoated onto a substrate, the slurry comprising the support material, the alkaline-earth-metal ions, optionally the organic compound and optionally PGM or palladium ions (i.e. without first preparing the alkaline-earth-metal-sulfate-loaded support material via the method of the present invention), and then the slurry is dried and/or heated and/or calcined by conventional methods. Without wishing to be bound by theory, this may be because in the drying step of conventional preparation methods, due to evaporation of the solvent (typically water) in the washcoat and the presence of the alkaline-earth-metal ions, the organic compound and/or a complex thereof in solution, a higher proportion of the alkaline-earth-metal species (nanoparticles) may form closer to the top of the washcoat later, rather than having an even or uniform distribution, as the solvent evaporates and the solutes move to the surface. Such a method may be a typical washcoat preparation method using such components. This may be particularly the case for organic compounds such as taurine, which may have relatively low solubility in water, and therefore may require a relatively large amount of solvent, i.e. resulting in a sparse slurry.

By contrast, when the alkaline-earth-metal-sulfate-loaded support material of the present invention is used in such a washcoat, the support material already comprises the alkaline-earth-metal sulfate nanoparticles of the favourable particle size distribution loaded thereon, and so such movement and relocation of the alkaline-earth-metal sulfate may be prevented due to insolubility of the alkaline-earth-metal sulfate nanoparticles. In other words, wicking of the alkaline-earth-metal species can be prevented, while still achieving the advantageous effects of the favourable particle size distribution of the alkaline-earth-metal sulfate that can be provided by the use of the organic compound described herein.

Advantageously, such a catalyst article may exhibit improved light-off temperatures and faster times to the T₅₀ of the catalyst on warming up, for TWC activity such as abatement of total hydrocarbons (THC), CO and NOₓ. T₅₀ is the temperature at which a catalyst reaches 50% conversion of a particular pollutant species, as is known to the skilled person.

The term "loaded" as used herein in the context of "an alkaline-earth-metal-sulfate-loaded support material", for example, may encompass that the alkaline-earth metal sulfate may be directly supported on and/or in the support material. The term "supported on and/or in" as used herein in the context of the invention may encompass that the alkaline-earth metal sulfate (typically in the form of nanoparticles) is in direct contact with at least a portion of the surface of the support material and/or is present in at least some of the pores of the support material, if the support material is porous.

The term "support material" as used herein may encompass any material that is capable of supporting at least the alkaline-earth metal sulfate thereon or therein. The support material may take any form, but is typically in the form of a powder, more typically a high surface area powder. When the method of the present invention is used to prepare a catalysed filter, such as a wall flow filter or flow-through filter, the support material will typically be in the form of a powder having a D₅₀ of, for example, from 0.1 to 30 µm, more typically from 2 to 10 µm as measured using Dynamic light scattering method, even more typically 4 to 6 µm. Such particle sizes may facilitate desirable rheological properties of a slurry used to coat the monolith substrate to reduce the backpressure increase. Preferable support materials are described elsewhere herein.

Unless otherwise specified or implied, the use of the terms "first", "second", etc. is intended only as a label, and is not intended to indicate the relative position or location of the particular feature.

The term "slurry" as used herein may encompass a liquid comprising insoluble material, e.g. insoluble particles. Slurries described herein may comprise (1) solvent; (2) soluble content, e.g. free PGM (such as Pd) ions, free alkaline-earth-metal ions and free organic compound (i.e. outside of the support); and (3) insoluble content, e.g. supported particles with and without interactions with components of the solution. A slurry is particularly effective at disposing a material onto a substrate, in particular for maximized gas diffusion and minimized pressure drop during catalytic conversion.

The term "spray drying" and other derivatives thereof as used herein take on their usual meaning in the art, which may involve rapidly drying a liquid or slurry with a hot gas, for example. The particular method of spray drying is not particularly limited and the skilled person would be aware of suitable methods.

The step of heating the spray-dried powder may typically comprise forming nanoparticles of a sulfate of the alkaline-earth-metal on the support material. Without wishing to be bound by theory, this is thought to be due to the presence of the organic compound described herein.

Heating the slurry is typically carried out in an oven or furnace, more typically a belt or static oven or furnace, typically in hot air at a specific flow from one direction. The heating may comprise calcination. During the heating, any complex that may have formed in the first slurry may at least partially, substantially or completely decompose. In other words, the ligands of such a complex, e.g. the organic compound, are at least partially, substantially or completely removed or separated from the alkali earth metal, and are removed from the final catalyst article. However, it is thought that the organic compounds, which comprise the sulfur-containing functional groups described herein, may decompose to provide the alkaline-earth-metal sulfate. As a result of the heating (calcination), the support material is typically substantially free of the organic compound, more typically completely free of the organic compound.

The term "nanoparticle" as used herein may generally encompass a particle having a Rietveld crystallite size of from 0.01 nm to 100 nm as measured by XRD. The nanoparticles may be in any shape, *e.g.* a sphere, a plate, cubic, cylindrical, hexagonal or a rod, but are typically spherical.

Following the heating step, the support material is typically cooled, more typically to room temperature. The cooling is typically carried out in air with or without cooling agent/media, typically without cooling agent.

Preferably, the first slurry is substantially free of platinum group metals, such as platinum, palladium and/or rhodium. Due to the limitations of spray drying processes, if PGMs are also present in the first slurry, then some yield of the PGM may be lost during the process. This is undesirable, because, among other reasons, PGMs are expensive and their loss/waste would be against the purpose of the PGM thrifting of the invention. If PGMs are to be loaded onto the support material for use in a catalyst article, then this is preferably after the spray drying process, and more preferably after the method of manufacturing an alkaline-earth-metal-sulfate-loaded support material of the first aspect.

The expression "substantially free of' as used herein with reference to a material, typically in the context of the content of a slurry, region, a layer or a zone, means that the material is present in a minor amount, such as ≤ 5 % by weight, preferably ≤ 2 % by weight, more preferably ≤ 1 % by weight, even more preferably ≤ 0.5 % by weight, still more preferably ≤ 0.1 % by weight, yet still more preferably ≤ 0.01 % by weight and yet still more preferably ≤ 0.005 % by weight, based on the total weight of said material. The expression "substantially free of" embraces the expression "does not comprise".

Preferably, the first slurry consists essentially of, more preferably consists of, the support material, the alkaline-earth-metal ions, the organic compound, and optionally a counterion for the alkaline-earth-metal ions. Suitable counterions for the alkaline-earth-metal ions are known to the skilled person. The counterion for the alkaline-earth-metal ions may comprise hydroxide, nitrate and/or acetate ions, for example, preferably acetate ions.

The expression "consists essentially of' as used herein limits the scope of a feature to include the specified materials or steps, and any other materials or steps that do not materially affect the basic characteristics of that feature, such as for example minor impurities. The expression "consists essentially of' embraces the expression "consists of'.

Preferably, the first slurry comprises water. In other words, the first slurry is preferably an aqueous slurry. This is in line with typical washcoating techniques in the field. Thus, in order to perform the method of the present invention, it would be simple to modify techniques and apparatuses used in conventional methods to perform the method of the present invention due to the use of similar components. The organic compound is therefore preferably at least partially water soluble.

The organic compound comprises a functional group selected from a sulfo group (-SO₃H), a sulfonyl group (-S(=O)₂-) and a sulfinyl group (-S(=O)-). Without wishing to be bound by theory, it is thought that such a sulfur containing group may interact and/or complex with the alkaline-earth-metal ions in the first slurry. Moreover, it is the presence of such sulfur containing groups that enable the (nanoparticles of a) sulfate of the alkaline earth metal to be formed.

The organic compound preferably further comprises an amine functional group, preferably a primary amine functional group. In this regard, the organic compound preferably comprises a sulfo group and a primary amine group.

The organic compound may comprise from 1 to 6 carbon atoms, preferably from 2 to 4 carbon atoms, more preferably 2 carbon atoms. Such organic compounds may provide a good balance between solubility in the solution, ability to form complexes with the metal species, and ability to decompose on heating to form the resulting nanoparticles of the desired size.

In particular, the organic compound preferably comprises one or more of aminomethanesulfonic acid, taurine, homotaurine, 4-aminobutane-1-sulfonic acid, 2-aminopropane-1-sulfonic acid, 2-methyltaurine, dimethyl sulfone, sulfonane, cysteic acid, dimethyl sulfoxide and aminobenzenesulfonic acid, more preferably, taurine. In some embodiments, the organic compound (such as taurine) to barium can have a molar ratio of at least 1:1, 1.2: 1, 1.5: 1, 2: 1, or even 3: 1. In other embodiments, the organic compound (such as taurine) to barium can have a molar ratio of 3:1 to 1:1, 2: 1 to 1:1, or 1.5: 1 to 1:1.

Such preferred organic compounds may not have a high solubility in water, and therefore the rapid drying brought about by spray drying may help to maintain an even distribution of the alkaline-earth-metal sulfate on the support material.

The alkaline-earth-metal ions preferably comprise one or more of calcium ions, strontium ions and barium ions, more preferably strontium and/or barium ions, even more preferably barium ions. Barium is known to provide excellent promoter activity in combination with palladium, for example, in TWCs. Providing the first slurry may typically comprise contacting the support material and/or the organic compound with (a solution comprising) an alkaline-earth-metal salt, preferably wherein the alkaline-earth-metal salt comprises one or more of an alkaline-earth-metal hydroxide, an alkaline-earth-metal nitrate and an alkaline-earth-metal acetate, preferably an alkaline-earth-metal acetate. Preferably, the alkaline-earth-metal salt comprises barium acetate.

Preferably, the support material comprises an inorganic oxide, more preferably a metal oxide, even more preferably a refractory metal oxide. The support material preferably comprises one or more of alumina, silica, titania, ceria, zirconia, a ceria-zirconia mixed oxide, vanadia, lanthana and zeolites. The support material more preferably comprises alumina and/or a ceria-zirconia mixed oxide, even more preferably the support material comprises alumina and a ceria-zirconia mixed oxide. The alumina is preferably gamma alumina. The ceria-zirconia mixed oxide preferably comprises a ceria: zirconia molar ratio of from 10:90 to 90:10, more preferably from 30:70 to 70:30, even more preferably from 40:60 to 60:40.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

It is particularly preferred that the support material comprises both alumina and a ceria-zirconia mixed oxide. Having an alkaline-earth-metal sulfate (preferably barium sulfate), typically in combination with PGM (such as Pd) present on (i) alumina may provide particularly good NOₓ conversion and (ii) a ceria-zirconia mixed oxide may provide particularly good CO/THC conversion, for example.

It has been surprisingly found that the method of the present invention may facilitate the loading of the alkaline-earth-metal sulfate onto both alumina and a ceria-zirconia mixed oxide simultaneously. In conventional preparation methods involving drying a slurry comprising the components of the slurry more slowly, an alkaline-earth-metal sulfate may typically be more readily loaded on and/or in the alumina over the ceria-zirconia mixed oxide. This is thought to be due to the relatively higher surface area of the alumina compared to the ceria-zirconia mixed oxide, for example. However, the method of the present invention may facilitate a more even distribution of the alkaline-earth metal sulfate between the two different support materials. Advantageously, this may provide the above-described advantageous effects but by a single manufacturing method, i.e. rather than separately loading the alkaline-earth-metal sulfate on each of the different support materials and then later combining the support materials. In other words, the method of the invention may obtain an alkaline-earth-metal-sulfate-loaded alumina and an alkaline-earth-metal-sulfate-loaded ceria-zirconia mixed oxide in one method by simple including both of the different support materials in the first slurry, and then spray drying the first slurry comprising the two different support materials at the same time. This is surprising.

The alumina and/or ceria-zirconia mixed oxide is preferably doped with a dopant. The dopant preferably comprises one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium and yttrium. The dopant is preferably present in the alumina and/or ceria-zirconia mixed oxide in an amount of from 0.001 wt.% to 20 wt.%, preferably from 0.5 wt.% to 10 wt.%, based on the total weight of the dopant and the alumina and/or ceria-zirconia mixed oxide. Preferably, the support material comprises La-doped alumina and a ceria-zirconia mixed oxide.

Throughout the application, "wt.%" in connection with a dopant, for example, is calculated based on the metal oxide thereof. When doped, the support material is preferably a mixed oxide.

Preferably, the support material is in the form of a powder having a D₅₀ of from 0.1 to 30 µm, preferably from 2 to 10 µm, more preferably from 4 to 6 µm. The D₅₀ may be measured by Dynamic light scattering technique. This feature refers to the D₅₀ of the support material as provided in the first slurry, i.e. prior to the step of spray drying the first slurry.

Accordingly, in a preferred embodiment, provided is a method of manufacturing a barium-sulfate-loaded support material, the method comprising: providing a first slurry comprising a support material, barium ions and an organic compound, wherein the organic compound comprises a functional group selected from a sulfo group (-SO₃H), a sulfonyl group (-S(=O)₂-) and a sulfinyl group (-S(=O)-) and wherein the support material comprises alumina, preferably La-doped alumina, and a ceria-zirconia mixed oxide; spray drying the first slurry to provide a spray-dried powder; and heating the spray-dried powder to form a barium-sulfate-loaded support material, preferably wherein the organic compound comprises taurine.

The step of providing a first slurry may typically comprise contacting the support material, alkaline-earth-metal ions, typically in the form of an alkaline-earth-metal salt, and the organic compound with a solvent, preferably comprising water. The components of the slurry may be provided/contacted with each other in any order, sequentially or in unison. However, preferably, providing a first slurry comprises: providing a solution comprising alkaline-earth-metal ions and the organic compound, preferably wherein the solution is an aqueous solution; providing a support material; and contacting the solution with the support material to form the first slurry. Providing the solution may typically comprise contacting the alkaline-earth-metal ions, typically in the form of an alkaline-earth-metal salt, and the organic compound with a solvent, preferably comprising water. Without wishing to be bound by theory, it is thought that by first providing a solution comprising alkaline-earth-metal ions and the organic compound, it is thought that the formation rate of alkaline-earth-metal sulfate is relatively slow with the presence of organic compound during the calcination stage, resulting nano-scale particle size of the alkaline-earth-metal sulfate. Such a small particle size may be favourable in interaction with PGM, preferably palladium, particle size distributions that may be loaded onto the support material for use in a catalyst article.

Preferably, heating the spray-dried powder comprises heating the spray-dried powder at a temperature of from 300 to 700 °C for from 10 minutes to 5 hours, more preferably at a temperature of from 400 to 600 °C for from 30 minutes to 4 hours, even more preferably at a temperature of from 450 to 550 °C for from 1 hour to 3 hours, still more preferably at a temperature of about 500 °C for about 2 hours.

Preferably, heating the spray-dried powder comprises calcining the spray-dried powder. The term "calcination", "calcine", "calcining" and the like as used herein may encompass a thermal treatment process in the absence of, or limited supply of, air or oxygen to bring about a thermal decomposition or change. However, typically, calcination in the present context involves heating in air in an oven. In some preferred embodiments, the calcination comprises heating (in air in an oven) at a temperature of from 350 to 1100 °C, preferably from 400 to 900 °C, more preferably from 450 to 800 °C for from 1 to 8 hours, preferably from 2 to 5 hours.

Preferably, the first slurry comprises a solids content of from 5 to 40 %, more preferably from 10 to 30 %, even more preferably from 10 to 20% and still more preferably about 15%. Such a solids content may be particularly suitable for use in the spray-drying process of the invention.

The method preferably further comprises stirring the first slurry prior to the step of spray drying the first slurry, preferably wherein the first slurry is stirred for at least 10 minutes, more preferably for at least 20 minutes, even more preferably for at least 30 minutes. Preferably, the first slurry is stirred for from 10 to 90 minutes, more preferably for from 20 to 60 minutes and even more preferably for from 30 to 40 minutes. Stirring may advantageously increase the homogeneity of the slurry, and therefore increase the dispersion of the alkaline-earth-metal sulfate on the support material.

In an alternative aspect, the present invention provides a method of manufacturing an alkaline-earth-metal-sulfate-loaded support material, the method comprising: providing a first slurry comprising a support material, alkaline-earth-metal ions and an organic compound, wherein the organic compound comprises a functional group selected from a sulfo group (-SO₃H), a sulfonyl group (-S(=O)₂-) and a sulfinyl group (-S(=O)-); drying the first slurry to provide a dried powder; and heating the dried powder to form an alkaline-earth-metal-sulfate-loaded support material; wherein the first slurry is substantially free of platinum group metals.

The relevant preferred features and embodiments of the first aspect apply equally to this aspect. The method of this alternative aspect may provide similar advantages to the first aspect for at least similar reasons. The drying preferably occurs at a temperature of from 60 °C to 200 °C, more preferably from 70 °C to 130 °C; and/or for from 10 to 360 minutes, preferably from 15 to 60 minutes.

In a further aspect, the present invention provides an alkaline-earth-metal-sulfate-loaded support material obtained or obtainable by the method of the above aspects.

The relevant preferred features and embodiments of the first aspect apply equally to this aspect. Moreover, for the avoidance of doubt, the following preferred features apply equally to the method of the above aspect, where appropriate.

Preferably, the alkaline-earth-metal-sulfate-loaded support material comprises from 1 to 25 wt.% of the alkaline-earth-metal sulfate, based on the total weight of the alkaline-earth-metal-sulfate-loaded support material. More preferably, the alkaline-earth-metal-sulfate-loaded support material comprises from 2 to 20 wt.% or 5 to 20 wt.% of the alkaline-earth-metal sulfate, based on the total weight of the alkaline-earth-metal-sulfate-loaded support material. If two or more different types of support material are present, then the wt.% is on the basis of the total weight of all of the alkaline-earth-metal-sulfate-loaded support materials.

Preferably, the alkaline-earth-metal sulfate comprises nanoparticles of the alkaline-earth-metal sulfate. Preferably, the alkaline-earth-metal sulfate comprises nanoparticles of the alkaline-earth-metal sulfate having a crystallite size of from 0.1 nm to 30 nm, preferably from 5 to 25 nm or 5 to 20 nm, more preferably from 5 to 15 nm. Unless otherwise specified, the crystallite size is preferably the Rietveld crystallite size. The crystallite size may be measured by X-ray diffraction (XRD). Preferably, substantially all of the alkaline-earth-metal sulfate nanoparticles have such a crystallite size. Such particle sizes may advantageously enable the favourable properties discussed above, such as high activity and resistance to deactivation upon ageing. Moreover, such sizes of the nanoparticles, in combination with the typically similar particle sizes for PGM (such as Pd) nanoparticles, may help to achieve the advantageous properties described above as a result of the comparable particle sizes.

Unless otherwise described herein, any crystallite size described herein may be measured by XRD. Suitable techniques are known in the art. For example, such a technique may be described as follows. To acquire the X-ray diffraction data, an X'Pert Pro MPD diffractometer can be used with the BraggBrentano^{HD} mirror, ¼° divergent slit, 20mm mask, sample spinner, and the PIXcel detector. A triplicate scan can be performed over the range 5° to 115°, a 0.02° step size, and a 50min total scan time. The data can be analysed using the HighScore Plus software. The transition alumina phase can be modelled using partial or not known crystal structure method (N.V.Y. SCARLETT and I.C. MADSEN, Quantification of phases with partial or not known crystal structure, Powder Diffraction (2006), 21(4), 278-284, which is incorporated herein by reference) and all other phases can be modelled using Rietveld. Crystallite size and strain can be measured based on the Pseudo-Voigt profile function and can be corrected for instrument broadening. Crystallite size measured by XRD is a common parameter for determining nanoparticle sizes of such species in the field of the present invention.

In a further aspect, the present invention provides a method of manufacturing a catalyst article, the method comprising: manufacturing an alkaline-earth-metal-sulfate-loaded support material according to the method of the above aspect or providing an alkaline-earth-metal-sulfate-loaded support material according to the above aspect; providing a second slurry comprising the alkaline-earth-metal-sulfate-loaded support material and PGM ions; disposing the second slurry on a substrate; and heating the second slurry to form PGM nanoparticles on the alkaline-earth-metal-sulfate-loaded support material.

The term "catalyst article" used herein may encompass an article in which a catalyst is supported thereon or therein. The article may take the form of, for example, a flow-through monolith, or a filter, e.g. a wall flow filter. The catalyst article may be for use in an emission treatment system, in particular an emission treatment system for a gasoline engine, preferably a stoichiometric gasoline engine. The catalyst article may be for use in three-way catalysis.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art, can be a flow through monolith or a wall flow filter, preferably a flow through monolith.

The step of providing a second slurry may typically comprise contacting the alkaline-earth-metal-sulfate-loaded support material and the PGM ions, typically in the form of a PGM salt, such as PGM (such as Pd) nitrate and/or PGM (such as Pd) acetate, with a solvent, preferably comprising water.

Preferably, the second slurry comprises water. In other words, the second slurry is preferably an aqueous slurry. This is in line with typical washcoating techniques in the field. Thus, in order to perform the method of the present invention, it would be simple to modify techniques and apparatuses used in conventional methods to perform the method of the present invention due to the use of similar components.

Preferably, providing a second slurry comprises: providing an intermediate slurry comprising the alkaline-earth-metal-sulfate-loaded support material; and contacting the intermediate slurry with a PGM salt, preferably with a solution comprising the PGM salt. The PGM salt preferably comprises one or more of PGM nitrate and PGM acetate, more preferably PGM nitrate. The intermediate slurry comprises the alkaline-earth-metal-sulfate-loaded support material and a solvent, preferably water. Preferably, the intermediate slurry consists essentially of, more preferably consists of the alkaline-earth-metal-sulfate-loaded support material and the solvent. The intermediate slurry is preferably provided by contacting the alkaline-earth-metal-sulfate-loaded support material with the solvent. Preferably, providing an intermediate slurry comprises breaking down, such as by grinding and/or (vigorous) mixing, the alkaline-earth-metal-sulfate-loaded support material, preferably using a high shear mixer, such that the alkaline-earth-metal-sulfate-loaded support material has a D₅₀ of about 5 to 15 µm, preferably about 4 to 6 µm. The D₅₀ may be measured by Dynamic light scattering technique.

The method preferably further comprises stirring the second slurry prior to the step of disposing the second slurry on a substrate, preferably wherein the second slurry is stirred for at least 10 minutes, more preferably for at least 20 minutes, even more preferably for at least 30 minutes. Preferably, the second slurry is stirred for from 10 to 90 minutes, more preferably for from 20 to 60 minutes and even more preferably for from 30 to 40 minutes. Stirring may advantageously increase the homogeneity of the slurry, and therefore may increase the distribution of the PGM ions on the alkaline-earth-metal-sulfate-loaded support material.

Preferably, the second slurry further comprises one or more of a binder; and acid or a base; a thickening agent and/or a further inorganic oxide. In other words, providing the second slurry preferably further comprises contacting a slurry containing the alkaline-earth-metal-sulfate-loaded support material and the PGM ions with one or more of a binder; and acid or a base; a thickening agent and/or a further inorganic oxide. The further in organic oxide may be as described elsewhere herein, but does not necessarily comprise an alkaline-earth-metal sulfate loaded thereon.

Binders may include, for example, an oxide material with small particle size to bind the individual insoluble particles together in washcoat slurry. The use of binders in washcoats is well known in the art. A typical binder may comprise alumina.

Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose. The thickening agent may comprise natrasol.

Providing the second slurry may further comprise adjusting the pH of the second slurry to be 6 or greater, preferably 7 or greater, such as with tetraethylammonium hydroxide (TEAOH). Such a pH may provide the optimal conditions for washcoating, for example.

Preferably, the second slurry has a solids content of from 10 to 40 %, preferably from 15 to 35 %. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate. If the substrate is a wall flow filter, such solids contents may enable the slurry to enter the channels of the wall flow filter and may enable the slurry to enter the walls of the wall flow filter.

Disposing the second slurry on the substrate may be carried out using techniques known in the art. Typically, the second slurry may be poured into the inlet of the substrate using a specific moulding tool in a predetermined amount, thereby disposing the loaded support material (i.e. preferably also now loaded with the PGM ions) on the substrate. As discussed in more detail below, subsequent vacuum and/or air knife and/or drying steps may be employed during the disposition step. When the substrate is a filter block, the loaded support material may be disposed on the filter walls, within the filter walls (if porous) or both.

Heating the second slurry is typically carried out in an oven or furnace, more typically a belt or static oven or furnace, typically in hot air at a specific flow from one direction. The heating may comprise calcination. The heating may also comprise drying. The drying and calcination steps may be continuous or sequential. For example, a separate washcoat may be applied after the substrate is already washcoated and dried with a previous washcoat. A washcoated substrate can also be dried and calcined using one continuous heating program if coating is completed. During the heating, the PGM ions may coalesce and/or sinter to form the PGM nanoparticles on the support material. Particles of such PGM may also begin to form metal-metal and metal-oxide bonds. Of course, heating the second slurry typically comprises heating the second slurry and the substrate simultaneously. Of course, the step of heating the second slurry may therefore typically comprise securing the support material to the substrate, for example via a binder.

Following the heating step, the substrate is typically cooled, more typically to room temperature. The cooling is typically carried out in air with or without cooling agent/media, typically without cooling agent.

Accordingly, the method of this aspect typically results in the formation of a PGM-and-alkaline-earth-metal-sulfate-loaded support material. The PGM-and-alkaline-earth-metal-sulfate-loaded support material is typically disposed on the substrate in the form of a region, zone, washcoat or layer. In other words, the catalyst article typically comprises a first catalytic region comprising a support material having loaded thereon PGM nanoparticles and alkaline-earth-metal-sulfate nanoparticles. The first catalytic region is typically disposed on the substrate.

The term "disposed on" as used herein may encompass either having a catalyst composition or catalytic region directly disposed on the substrate, i.e. with no intervening material, and/or indirectly disposed on the substrate, i.e. with intervening material. If the substrate is porous, then the term "disposed on" may also encompass having the catalyst composition or catalytic region disposed therein, for example within the pores of the substrate, i.e. wherein the catalyst composition or (support material of) the catalytic region is disposed thereon and/or therein. The term "washcoat" as used herein is well-known in the field and refers to an adherent coating that is applied to a substrate usually during the production of a catalyst.

Preferably, disposing the second slurry on a substrate comprises washcoating.

Preferably, disposing the second slurry on the substrate comprises contacting the second slurry with the substrate and optionally: applying a vacuum and/or air knife to the substrate, and/or drying the second slurry on the substrate. This may result in a favourable distribution of the loaded support material that may be contained in the slurry on the substrate. The drying preferably occurs at a temperature of from 60 °C to 200 °C, more preferably from 70 °C to 130 °C; and/or for from 10 to 360 minutes, preferably from 15 to 60 minutes.

Preferably, heating the slurry to form PGM (such as Pd) nanoparticles on the alkaline-earth-metal-sulfate-loaded support material comprises heating: at a temperature of from 400 °C to 700 °C, preferably from 400 °C to 600 °C, more preferably from 450 °C to 600 °C; and/or for from 10 to 360 minutes, preferably from 35 to 120 minutes.

Preferably, heating the slurry to form PGM nanoparticles on the alkaline-earth-metal-sulfate-loaded support material comprises calcining.

The substrate preferably comprises cordierite. The substrate may be in the form of a honeycomb monolith, a wall flow filter or a flow through filter. The substrate may be a "blank", *i.e.* un-washcoated, substrate. Alternatively, the substrate may have one or washcoats already loaded thereon. In such a situation, the final catalyst article may comprise multiple layers of different washcoats.

In a further aspect, the present invention provides a catalyst article obtained or obtainable by the method of the above aspect.

The relevant preferred features and embodiments of the above aspects apply equally to this aspect. Moreover, for the avoidance of doubt, the following preferred features apply equally to the method of the above aspect, where appropriate.

In comparison to conventional catalyst articles, such a catalyst article may exhibit favourable light-off performance, in particular for NO, CO and total hydrocarbons during three-way catalytic conversions for stoichiometric gasoline emissions abatement. The catalyst article may also exhibit the other favourable properties described herein, such as high resistance to deactivation on ageing, and high activity, such as "cold start" conditions. Moreover, such a catalyst article may exhibit lower light-off temperatures and shorter times to reach T₅₀ for such pollutants.

Preferably, the alkaline-earth-metal-sulfate-loaded support material comprises from 1 to 25 wt.% of the alkaline-earth-metal sulfate, based on the total weight of the alkaline-earth-metal sulfate and the support material. More preferably, the alkaline-earth-metal-sulfate-loaded support material comprises from 2 to 20 wt.% or 5 to 20 wt.% of the alkaline-earth-metal sulfate, based on the total weight of the alkaline-earth-metal-sulfate-loaded support material. If two or more different types of support material are present, then the wt.% is on the basis of the total weight of all of the alkaline-earth-metal-sulfate-loaded support materials. However, for the avoidance of doubt, the total weight for the basis of this calculation does not include the weight of any PGM (such as Pd) that is present.

Preferably, the alkaline-earth-metal sulfate comprises nanoparticles of the alkaline-earth-metal sulfate. Preferably, the alkaline-earth-metal sulfate comprises nanoparticles of the alkaline-earth-metal sulfate having a crystallite size of from 0.1 nm to 30 nm, preferably from 5 to 25 nm or 5 to 20 nm, more preferably from 5 to 15 nm. Preferably, substantially all of the alkaline-earth-metal sulfate nanoparticles have such a crystallite size. Such particle sizes may advantageously enable the favourable properties discussed above, such as high activity and resistance to deactivation upon ageing. Moreover, such sizes of the nanoparticles, in combination with the typically similar particle sizes for PGM nanoparticles, may help to achieve the advantageous properties described above as a result of the comparable particle sizes.

Preferably, the alkaline-earth-metal-sulfate-loaded support material is present in a first catalytic region and the alkaline-earth-metal-sulfate nanoparticles are evenly distributed within the first catalytic region. The term "evenly distributed" as used herein may encompass that the concentration of the alkaline-earth-metal-sulfate particles throughout the first catalytic region is (substantially) uniform. In other words, there are preferably no localised regions of the alkaline-earth-metal-sulfate particles in the first catalytic region (i.e. that have higher concentrations of the alkaline-earth-metal-sulfate particles compared to other regions), such as at the surface of the first catalytic region (in particular when the first catalytic region is a washcoat). The first catalytic region should be understood to encompass the entire area or volume in which the second slurry has been disposed (i.e. not a subset of this area or volume). Such a property can be observed using SEM, for example. Such a property may provide a catalyst article with the favourable TWC conversion properties described herein. Moreover, as described herein, the method of the present invention surprisingly facilitates such an even distribution, compared to other methods that still involve alkaline-earth-metal ions at the disposing on the substrate step of the method, since the alkaline-earth-metal sulfate particles are already loaded on and/or in the support material. Thus, such wicking of the alkaline-earth-metal species may be reduced, which may provide a catalyst article with improved catalytic performance. However, since the alkaline-earth-metal-sulfate particles have been manufactured by the methods described herein, the particle size distribution is also favourable. Such a final product may not be as simply to manufacture via other methods.

Preferably, the PGM (such as Pd) nanoparticles have a crystallite size of from 0.1 nm to 20 nm, more preferably from 5 to 15 nm. Preferably, substantially all of the PGM (such as Pd) nanoparticles have such a crystallite size. The crystallite size is preferably a Rietveld crystallite size measured as described herein. Such particle sizes may advantageously enable the favourable properties discussed above, such as high activity and resistance to deactivation upon ageing.

Preferably, M = C ± 70%, preferably M = C ± 50%, more preferably M = C ± 30%, even more preferably M = C ± 20%, M being the (Rietveld) crystallite size of the PGM (such as Pd) nanoparticles and C being the (Rietveld) crystallite size of the alkaline earth metal sulfate nanoparticles. In other words, the Rietveld crystallite size of the PGM (such as Pd) nanoparticles and the Rietveld crystallite size of the alkaline earth metal sulfate nanoparticles are preferably comparable in size, i.e. of a similar magnitude, for the reasons described above.

Preferably, the alkaline-earth-metal-sulfate-loaded support material is present in a first catalytic region and the support material comprises alumina and a ceria-zirconia mixed oxide; and when a cross section of the first catalytic region of the catalyst article is subjected to area analysis by FE-EPMA under conditions of pixel (section) size of 0.34 µm × 0.34 µm and number of measured pixels (sections) of 256 × 256, a characteristic X-ray intensity (α: cps) of the alkaline earth metal element (Ae) and a characteristic X-ray intensity (γ: cps) of the aluminium (Al) are measured for each pixel, and the Pearson correlation coefficient calculated using the resulting α and γ in each pixel is designated as R_{Ae/Al}, then the value of R_{Ae/Al} is at least 0.1, preferably at least 0.2; and when a cross section of the first catalytic region of the catalyst article is subjected to area analysis by FE-EPMA under conditions of pixel (section) size of 0.34 µm × 0.34 µm and number of measured pixels (sections) of 256 × 256, a characteristic X-ray intensity (α: cps) of the alkaline earth metal element (Ae) and a characteristic X-ray intensity (δ: cps) of the cerium (Ce) are measured for each pixel, and the Pearson correlation coefficient calculated using the resulting α and δ in each pixel is designated as R_{Ae/Ce}, then the value of R_{Ae/Ce} is at least 0.1, preferably at least 0.2. In other words, the alkaline-earth-metal sulfate is preferably loaded on both of the alumina and the ceria-zirconia mixed oxide in the catalyst article. This arrangement may be advantageous for the reasons described herein, and its more-simple production method (i.e. comprising fewer steps) may be facilitated by the methods of the present invention.

Preferably, the alkaline-earth-metal-sulfate-loaded support material is present in a first catalytic region and when a cross section of the first catalytic region of the catalyst article is subjected to area analysis by FE-EPMA under conditions of pixel (section) size of 0.34 µm × 0.34 µm and number of measured pixels (sections) of 256 × 256, a characteristic X-ray intensity (α: cps) of the alkaline earth metal element (Ae) and a characteristic X-ray intensity (β: cps) of the palladium (Pd) are measured for each pixel, and the Pearson correlation coefficient calculated using the resulting α and β in each pixel is designated as R_{Ae/Pd}, then the value of R_{Ae/Pd} is at least 0.1, preferably at least 0.2, wherein the PGM is Pd. The Pearson correlation coefficient (product moment correlation coefficient) is known to the skilled person and is calculated based on the results of area analysis by FE-EPMA. The correlation coefficient R_{Ae/Pd} is determined by the formula: R_{Ae/Pd}= (covariance)/(standard deviation of α×standard deviation of β), wherein the first variable (α) is a characteristic X-ray intensity of the alkaline earth metal element (Ae) and the second variable (β) is a characteristics X-ray intensity of the palladium (Pd) in area analysis by FE-EPMA. Such a calculation is known to the skilled person. In other words, preferably, the alkaline earth metal element and the palladium are highly correlated in such a catalyst article. That is, the alkaline earth metal may be present in a highly dispersed state with reference to the distribution of the palladium on the substrate. Thus, the ability of the alkaline earth metal to act as a promoter species for the palladium may be optimised. Preferably, R_{Ae/Pd} is at least 0.1, preferably at least 0.2. In other words, the alkaline earth metal and palladium are preferably highly correlated. Such high correlation may not be easily achieved with the larger alkaline-earth-metal sulfate nanoparticles of conventional catalyst articles, i.e. those having small palladium nanoparticles, but much larger alkaline-earth-metal sulfate nanoparticles.

Preferably, the total loading of the alkaline-earth-metal-sulfate-loaded support material having the PGM (such as Pd) nanoparticles formed thereon is from 0.5 g/in³ to 5 g/in³.

In a further aspect, the present invention provides a catalyst article comprising: a substrate; and a first catalytic region disposed on the substrate; wherein the first catalytic region comprises a support material having loaded thereon PGM nanoparticles and alkaline-earth-metal-sulfate nanoparticles; wherein the alkaline-earth-metal-sulfate nanoparticles are evenly distributed within the first catalytic region.

The relevant preferred features and embodiments of the above aspects apply equally to this aspect.

In comparison to conventional catalyst articles, such a catalyst article may exhibit favourable light-off performance, in particular for NO, CO and total hydrocarbons during three-way catalytic conversions for stoichiometric gasoline emissions abatement. The catalyst article may also exhibit the other favourable properties described herein, such as high resistance to deactivation on ageing, and high activity, such as lower light-off temperatures and shorter times to reach T₅₀ for such pollutants.

Preferably, the catalyst article is obtained or obtainable by the method of the above aspect.

Preferably, the catalyst article is for use in an emissions treatment system, preferably wherein the catalyst article is for three-way catalysis. Preferably, the catalyst article is for treating exhaust gas from a gasoline engine.

Preferably, the alkaline-earth-metal-sulfate-loaded support material is present in a first catalytic region, and the catalyst article further comprises a second catalytic region; and wherein the second catalytic region comprises palladium, platinum and/or rhodium. In certain embodiments, the first catalytic region forms a first layer on the substrate and the second catalytic region forms a second layer on the substrate, the first layer extending from a first end of the substrate and the second layer extending from a second end of the substrate. In other embodiments, the second catalytic region forms a first (bottom) layer on the substrate, the first catalytic region forms a second (top) layer on top of the second catalytic region.

Preferably, the catalyst article further comprising a third catalytic region, wherein the second catalytic region comprises palladium and/or platinum and optionally wherein the third catalytic region comprises rhodium and is disposed on top of the first catalytic region and/or the second catalytic region such that the first and/or second catalytic regions are each located between the third catalytic region and the substrate.

In another preferred embodiment, the first catalytic region forms a first layer on the substrate and the second catalytic region forms a second layer on the substrate, the first layer being disposed directly onto the substrate and the second layer being disposed directly onto the first layer. In another preferred embodiment, the first catalytic region forms a first layer on the substrate and the second catalytic region forms a second layer on the substrate, the second layer being disposed directly onto the substrate and the first layer being disposed directly onto the first layer. In another preferred embodiment, the catalyst article further comprises a third catalytic region, wherein the third catalytic region is disposed directly onto the first or second layer, optionally wherein the second catalytic region comprises platinum and the third catalytic region comprises rhodium. In yet another preferred embodiment, the catalyst article further comprises a third catalytic region, wherein the first catalytic region is disposed directly onto the second and/or third catalytic region, optionally wherein the second catalytic region comprises palladium and the third catalytic region comprises rhodium.

In other words, a catalyst article comprising a catalytic region formed by the method of the invention may have such a catalyst layer as a top, middle or bottom layer, for example. The term "bottom layer" as used herein may encompass a layer (e.g. washcoat layer) that is closest to or in contact with the substrate (*i.e.* substrate walls). The term "top layer" as used herein may encompass a layer (*e.g.* a washcoat layer) that is more remote from the substrate (*i.e.* substrate walls) than the bottom layer, and may be situated on top of the bottom layer. In such layered catalyst articles, the top and/or bottom layer of support material may have a further PGM thereon, for example platinum. In such layered catalyst articles, the top and/or bottom layer may comprise multiple PGMs, i.e. may be bimetallic (e.g. contain Pd-Rh or Pd-Pt) or trimetallic (e.g. Pd-Rh-Pt). The catalyst article may comprise two or more catalyst zones, for example an upstream zone and a downstream zone. The zones may differ from each other by having different PGMs (e.g. Rh upstream and Pd downstream or vice versa) or differing by the amount of different type PGMs e.g. monometallic, bimetallic or trimetallic.

In any of the above preferred embodiments, the first, second and/or third catalytic regions may be in the form of zones, such zones covering less than 100% of the substrate, such as 90% or less, 80% or less, 70% or less, 60% or less, 50% or less, 40% or less, 30% or less, 20% or less, or 10% or less. The zone may extend from the inlet end or the outlet end of the substrate.

The substrate may have a first end and a second end with an axial length L.

The first catalytic region can extend for 100 percent of the axial length L. (E.g., see **FIGs. 1**, **2a**, **2b****,** and **6a****-6c**). In some embodiments, the first catalytic region can extend for 20 to 99%, 30 to 90%, or 40-80% of the axial length L. Alternatively, the first catalytic region can extend for 30 to 70 percent of the axial length L. Preferably, for 40 to 60 percent, more preferably, 45 to 55 percent of the axial length L, (*E.g., see* **FIGs. 3a-5d** and **7a-7l**).

The second catalytic region can extend for 100 percent of the axial length L. (*E.g., see* **FIGs. 2a,** **2b****,** and **6a****-6c**)

The second catalytic region can extend for 30 to 70 percent of the axial length L. Preferably, for 40 to 60 percent, more preferably, 45 to 55 percent of the axial length L. and most preferably, the total length of the second region and the first region is equal or greater than the axial length L (*E.g., see* **FIGs. 3a-5d** and **7a-7l**).

The second catalytic region can overlap with the first catalytic region for 0.1 to 99 percent of the axial length L (*e.g., see* **FIGs. 3c** and **3d**, the first catalytic region can overlie the second catalytic region or the second catalytic region can overlie the first catalytic region). Alternatively, the total length of the second catalytic region and the first catalytic region can equal to the axial length L (*e.g., see* **FIGs. 3a** and **3b**). In yet another alternative, total the length of the second catalytic region and the first catalytic region can be less than the axial length L, for example, no greater than 95%, 90%, 80%, or 70% of the axial length L.

The third catalytic region can extend for 100 percent of the axial length L (*e.g., see* **FIGs. 4a-4d** and **6a-6c**).

The third catalytic region can be less than the axial length L, for example, no greater than 95%, 90%, 80%, or 70% of the axial length L (*e.g., see* **FIGs. 5a-5d** and **7g-7l**).

The second catalytic region can overlap with the first catalytic region for 0.1 to 99 percent of the axial length L (*e.g., see* **FIGs. 7a-7l**), the first catalytic region can overlie the second catalytic region, or the second catalytic region can overlie the first catalytic region). Alternatively, the either of second or first region can extend for 30 to 70 percent of the axial length L. Preferably, for 40 to 60 percent, more preferably, 45 to 55 percent of the axial length L. and most preferably, the total length of the second and the first region is equal or less than the axial length L (*e.g., see* **FIGs. 4a-4d**)**.**

The catalyst article preferably comprises from 10 g/ft³ to 200 g/ft³ palladium, preferably from 50 g/ft³ to 150 g/ft³ palladium. Advantageously, such palladium levels may be lower than those of conventional catalyst articles but without compromising catalytic activity.

In a further aspect, the present invention provides an emission treatment system comprising the catalyst article described herein.

The emission treatment system is preferably for a gasoline engine.

The gasoline engine preferably operates under stoichiometric conditions.

The present invention may also encompass a fuel-combustion and emission treatment system, the fuel-combustion and emission treatment system comprising an engine, preferably a gasoline engine, and the emission treatment system of the above aspect.

In a further aspect, the present invention provides a method of treating an exhaust gas, the method comprising: providing the catalyst article described herein; and contacting the catalyst article with an exhaust gas.

The exhaust gas is preferably from a gasoline engine. The catalyst article is particularly suitable for treating such exhaust gas. Moreover, exhaust from a gasoline engine is typically harsher than that from a diesel engine. Therefore, the advantageous ageing properties of the catalyst articles described herein are particularly beneficial therefor. The gasoline engine preferably operates under stoichiometric conditions.

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10%, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "loading" as used herein refers to a measurement in units of g/ft³ on a metal weight basis.

Where the present specification refers to "a" or "an", this encompasses the singular and plural forms.

The following non-limiting examples merely illustrate the invention. Those skilled in the art will recognize many variations that are within the spirit of the invention and scope of the claims.

### Reference Catalyst 1

*Bottom layer front zone washcoat slurry was prepared by:*
(i) mixing a solution of palladium nitrate and diluted barium acetate solution,
(ii) adding taurine to the mixed solution (i) above and keep mixing,
(iii) milling and making a slurry containing 4% La₂O₃ doped alumina separately,
(iv) adding the pre-solution in step (ii) to the pre-milled 4% La₂O₃-doped alumina slurry (iii) and mixing;
(v) milling and making a slurry containing a ceria and zirconia mixed oxide separately,
(vi) adding the resulting ceria zirconia mixed oxide slurry (v) to the batch at step (iv),
(vii) thickening the washcoat slurry in (vi) with rheology modifier.

The final compositions of the bottom layer front zone washcoat contained ceria zirconia composite 0.4 g/in³, 4% La₂O₃-doped alumina 0.8 g/in³, Ba element 150 g/ft³, and Pd element 9 g/ft³.
*Bottom layer rear zone washcoat slurry was prepared by:*
(i) milling and making a slurry containing a ceria and zirconia mixed oxide,
(ii) adding rhodium nitrate solution to the slurry (i),
(iii) adjusting pH of the slurry (ii) to precipitate Rh onto mixed oxide,
(iv) adding milled 4% La₂O₃ doped alumina to the slurry (iii),
(v) thickening the washcoat with rheology modifier.

The final compositions of the bottom layer rear zone washcoat contained ceria zirconia composite 1.5 g/in³ in total, 4% La₂O₃-doped alumina 0.5 g/in³ and Rh element 10 g/ft³.
*Top layer front zone washcoat was prepared by:*
(i) milling a ceria and zirconia mixed oxide,
(ii) milling and making a slurry containing 4%La₂O₃ doped alumina,
(iii) blending the two slurries (ii) and (iii) above.
(iv) adding palladium nitrate to the slurry (iii) for mixing,
(v) adding gallic acid and mix,
(vi) adding barium sulfate powder and mix,
(vii) Adjusting pH to 7.0 or above
(viii) thickening the washcoat (iv) with rheology modifier.

The final compositions of the top layer front zone washcoat contained ceria zirconia composite 0.4 g/in³, 4% La₂O₃-doped alumina 0.8 g/in³, Ba element 150 g/ft³, and Pd element 131 g/ft³.

### Washcoat Coating on a flow through monolithic substrate:

(i) Use precision coating method with the bottom layer front zone dose first to 75%-80% dose length. Dry to 80% or greater moisture removal.
(ii) Calcine.
(iii) Coat the bottom layer rear zone washcoat to a 75%-80% dose length target. Dry to 80% or greater moisture removal.
(iv) Apply the top layer front zone by precision coating method targeting 30% to 35% dose length. Drying to 80% moisture removal or greater.
(v) Calcine again.

### Inventive Catalyst 1 - Spray dry BaSO₄ on blended supports with 150 g/ft³ BaSO₄

*Bottom layer front zone and rear zone washcoat slurries were prepared the same way as Reference Catalyst 1.*

*Top layer front zone washcoat was prepared by:*
(i) blending 4% La₂O₃ -doped alumina and a ceria and zirconia mixed oxide slurry,
(ii) adding water to adjust solids,
(iii) adding taurine and Ba acetate crystals to the blended slurry and mixing,
(iv) spray-drying the slurry (iii), followed by calcination,
(v) slurring the spray-dried powder obtained in step (iv),
(vi) adding palladium nitrate solution and mixing,
(vii) adjusting pH to 7 or above,
(viii) thickening the washcoat;

The final compositions of the top layer front zone washcoat contained ceria zirconia composite 0.4 g/in³, 4% La₂O₃-doped alumina 0.8 g/in³, Ba element 150 g/ft³, and Pd element 131 g/ft³.

Washcoat coating application was also the same as Reference Catalyst 1.

### Inventive Catalyst 2 - Spray dry BaSO₄ on blended supports with 300 g/ft³ BaSO₄

*Bottom layer front zone and rear zone washcoat slurries were prepared the same way as Reference Catalyst 1, correspondingly.*

*Top layer front zone washcoat was prepared the same method as Inventive Catalyst 1, the only difference is barium acetate quantity of 300g*/*ft³ at step (iii) of Top layer front zone washcoat preparation.*

The final compositions of the top layer front zone washcoat contained ceria zirconia composite 0.4 g/in³, 4% La₂O₃-doped alumina 0.8 g/in³, Ba element 300 g/ft³, and Pd element 131 g/ft³.

Washcoat coating application was the same as for Reference Catalyst 1.

### EXAMPLE 1: XRD ANALYSIS OF BA SULFATE SPECIES

The crystallite size of the Ba species in spray-dried powders of Inventive Catalyst 1 and Inventive Catalyst 2 was analyzed by XRD and the results are shown in **Table 1**. For comparison, crystallite size of BaSO₄ compound used in Reference Catalyst 1 was also measured by the same technique and reported.

**Table 1: XRD Results**

| Samples | Ba species and crystallite size (nm) |
|---|---|
| BaSO₄ compound in Reference Catalyst 1 | Baryte |
| | ∼170 ± 3 |
| Spray-dried powder in Inventive Catalyst 1 | Baryte |
| | 7 ± 0.5 |
| Spray-dried powder in Inventive Catalyst 2 | Baryte |
| | 12 ± 1 |

Baryte (BaSO₄) was detected exclusively in Reference Catalyst 1, Inventive Catalyst 1, and Inventive Catalyst 2. The estimated crystallite size of BaSO₄ in Reference Catalyst 1 was about 170 nm with a standard deviation of 3 nm. In contrast, Baryte (BaSO₄) in the two inventive catalysts made by spray drying process was 7 ~12 nm, which is much smaller.

Ba is a well-known Pd promoter in TWC technology. It can donate electrons to Pd, making the electron configuration of Pd^{(II)} more like Rh, and can therefore improve Pd function. In order to maximize this promotion effect, Ba-Pd intimate contact is highly desirable. Typically, the Pd species is highly dispersed (not measurable in this study) and the majority is located in the pore of support materials. A smaller particle size of Ba species is favored due to, *inter alia,* there being a higher chance to get into the pore of the supports, resulting in close proximity of the Ba with the Pd. The two inventive catalysts obtain fresh Ba species having approximately one fifteenth of the size of that in the references, with enhanced Pd-Ba interaction therefore expected.

### EXAMPLE 2: FE-EPMA ANALYSIS OF PD AND BA INTERACTION

The Pearson correlation coefficients (product moment correlation coefficient) are calculated based on the results of area analysis by FE-EPMA and shown in **Table 2**. Three different washcoat regions from each sample (about 3000 and 5000 pixels in each extracted washcoat region) were analysed the technique and numbers in **Table 2** are the averages. Ba-Al and Ba-Ce interaction are almost zero for Reference Catalyst 1 when using BaSO₄ compound. This is because the micron size of particles of BaSO₄ compound in use. In contrast, for the two spray-dried powders, positive Pearson Correlation Coefficients of Ba-Al and Ba-Ce are reported, implicating that BaSO₄ is dispersed on both of the support materials. Moreover, enhanced Pd-Ba interaction of the two inventive catalysts is confirmed by the higher Ba-Pd Correlation Coefficients. For comparison, Reference Catalyst 1 shows a slightly negative coefficient of -0.15, indicating that Ba and Pd are randomly located, rather than physically approximate with each other.

**Table 2: Pearson Correlation Coefficient by EPMA**

| Catalysts | Pearson Correlation Coefficient by FE-EPMA | | |
|---|---|---|---|
| | Ba-Al | Ba-Ce | Ba-Pd |
| BaSO₄ compound in Reference Catalyst 1 | -0.09 | 0.01 | -0.15 |
| Spray-dried powder in Inventive Catalyst 1 | 0.28 | 0.64 | 0.28 |
| Spray-dried powder in Inventive Catalyst 2 | 0.65 | 0.29 | 0.44 |

### EXAMPLE 3: LIGHT OFF PERFORMANCES TEST IN ENGINE TESTING

All catalysts were engine bench aged for 108 hours with stoic/fuel cut aging cycles targeting peak temperature of catalyst bed at 1000 °C and tested over a gasoline engine. The light off performance is a typical condition with a gas volumetric space velocity of 95 K/hr, temperature ramp is 10 °C/min, the lambda of Air and Fuel Ratio (AFR) is perturbed at 14.55 with 0.5 amplitude. The conversion of THC, CO and NOₓ were calculated by comparing the concentration of the feed gas and the gas at the outlets of the catalysts.

The HC, CO and NOₓ T₅₀ light off temperatures are shown in **Table 3.** The data indicates clearly that both Inventive Catalyst 1 and Inventive Catalyst 2 of the present invention showed significantly improved light-off performance when compared with Reference Catalyst 1. In particular, Inventive Catalyst 2 is more active even than Inventive Catalyst 1 with about 15 ~ 20°C lower T₅₀ (T₅₀ is the temperature when the conversion reaches 50%).

**Table 3: Engine Bench Light Off Test Results**

| Pollutant | T₅₀ (°C) Reference Catalyst 1 | T₅₀ (°C) Inventive Catalyst 1 | T₅₀ (°C) Inventive Catalyst 2 |
|---|---|---|---|
| HC | 385 | 350 | 339 |
| CO | 382 | 341 | 329 |
| NOₓ | 376 | 342 | 331 |

### EXAMPLE 4: WARM-UP TEST IN ENGINE TESTING

All catalysts were engine bench aged for 108 hours with stoic/fuel cut aging cycles targeting peak temperature of catalyst bed at 1000 °C and tested over a gasoline engine. The warm-up test was typically conducted at 95K gas hourly space velocity. Pollutants from the engine out were pre-heated to 490 °C then directed to the cold catalyst. Time to reach 50% conversion of total hydrocarbon, carbon monoxide and NOₓ were recorded and named T₅₀HC, T₅₀CO and T₅₀NOₓ, respectively. The conversion of THC, CO and NOₓ were calculated by comparing the concentration of the feed gas and the gas at the outlets of the catalysts.

The data in **Table 4** indicate clearly that both Inventive Catalyst 1 and Inventive Catalyst 2 of the present invention warm up faster than Reference Catalyst 1. In particular, Inventive Catalyst 1 is even more active than Inventive Catalyst 2 exhibiting the shortest time to reach the certain conversion levels.

**Table 4: Engine Bench Warm Up Test Results**

| Time (sec) | Reference Catalyst 1 | Inventive Catalyst 1 | Inventive Catalyst 2 |
|---|---|---|---|
| T₅₀ HC | 9.15 | 7.13 | 8.08 |
| T₅₀ CO | 7.18 | 5.7 | 6.4 |
| T₅₀NOₓ | 8.15 | 6.43 | 7.28 |

### Reference Catalyst 2

*Bottom layer washcoat slurry was prepared by:*
(i) milling and making a slurry containing 4% La₂O₃ doped alumina separately,
(ii) milling and making a slurry containing a ceria zirconia mixed oxide separately,
(iii) blending the 4% La₂O₃ doped alumina slurry and the ceria zirconia mixed oxide slurry together,
(iv) adding required amount of palladium nitrate,
(v) adding barium nitrate,
(vi) adding binder,
(vii) thickening the washcoat slurry in with rheology modifier.

The final compositions of the bottom layer washcoat contained 4% La₂O₃-doped alumina 0.4 g/in³, ceria zirconia composite 0.95 g/in³, Ba element 150 g/ft³, and Pd element 18.2 g/ft³.

*Top layer rear zone washcoat slurry was prepared by:*
(i) milling and making a slurry containing a ceria and zirconia mixed oxide,
(ii) adding rhodium nitrate solution to the slurry (i),
(iii) adjusting pH of the slurry (ii) to precipitate Rh onto mixed oxide,
(iv) adding milled 4% La₂O₃ doped alumina to the slurry (iii),
(v) thickening the washcoat with rheology modifier.

The final compositions of the top layer rear zone washcoat contained ceria zirconia composite 1.5 g/in³ in total, 4% La₂O₃-doped alumina 0.5 g/in³ and Rh element 10.5 g/ft³.
*Top layer front zone washcoat was prepared by:*
(i) milling a ceria and zirconia mixed oxide,
(ii) milling and making a slurry containing 4% La₂O₃ doped alumina,
(iii) blending the two slurries (ii) and (iii) above.
(iv) adding palladium nitrate to the slurry (iii) for mixing,
(v) adding gallic acid and mix,
(vi) adding barium sulfate powder and mix,
(vii) adjusting pH to 7.0 or above,
(viii) thickening the washcoat (iv) with rheology modifier.

The final compositions of the top layer front zone washcoat contained ceria zirconia composite 0.4 g/in³, 4% La₂O₃-doped alumina 0.8 g/in³, Ba element 150 g/ft³, and Pd element 153 g/ft³.

### Washcoat Coating on a flow through monolithic substrate:

(i) Use precision coating method with the bottom layer front zone dose first to 50%-55% dose length. Dry to 80% or greater moisture removal.
(ii) Coat the bottom layer rear zone washcoat to a 50%-55% dose length target. Dry to 80% or greater moisture removal followed by calcination.
(iii) Apply the top layer rear zone by precision coating method targeting 65% to 75% dose length. Drying to 80% moisture removal or greater.
(iv) Coat the top layer front zone washcoat to a 35%-25% dose length target. Dry to 80% or greater moisture removal followed by calcination.

### Inventive Catalyst 3 - Spray dry BaSO₄ on 4% La₂O₃ - doped alumina with 150 g/ft³ BaSO₄

*Bottom layer washcoat slurries and top layer rear zone washcoat slurries were prepared the same way as Reference Catalyst 2.*

*Top layer front zone washcoat was prepared by:*
(i) Making a slurry containing 4% La₂O₃ -doped alumina,
(ii) adding taurine and Ba acetate crystals to the blended slurry and mixing,
(iii) spray-drying the slurry (ii), followed by calcination,
(iv) slurring the spray-dried powder obtained in step (iii),
(v) milling and making a slurry containing a ceria zirconia mixed oxide separately;
(vi) adding the ceria zirconia mixed oxide slurry to the slurry in step iv)
(vii) adding palladium nitrate solution and mixing,
(viii) thickening the washcoat;

The final compositions of the top layer front zone washcoat contained ceria zirconia composite 0.4 g/in³, 4% La₂O₃-doped alumina 0.8 g/in³, Ba element 150 g/ft³, and Pd element 153 g/ft³.

Washcoat coating application was also the same as Reference Catalyst 2.

### EXAMPLE 5: WARM-UP TEST IN ENGINE TESTING

All catalysts were engine bench aged for 108 hours with stoic/fuel cut aging cycles targeting peak temperature of catalyst bed at 1000 °C and tested over a gasoline engine. The warm-up test was typically conducted at 95K gas hourly space velocity. Pollutants from the engine out were pre-heated to 490 °C then directed to the cold catalyst. Time to reach 50% conversion of total hydrocarbon, carbon monoxide and NOₓ were recorded and named T₅₀HC, TsoCO and T₅₀NOₓ, respectively. The conversion of THC, CO and NOₓ were calculated by comparing the concentration of the feed gas and the gas at the outlets of the catalysts.

The data in **Table 5** indicate clearly that Inventive Catalyst 3 of the present invention exhibits the shorter time to reach the certain conversion levels.

**Table 5: Engine Bench Warm Up Test Results**

| Time (sec) | Reference Catalyst 2 | Inventive Catalyst 3 |
|---|---|---|
| T₅₀ HC | 10.4 | 9.4 |
| T₅₀ CO | 8.3 | 7.4 |
| T₅₀NOₓ | 9.7 | 8.1 |

The foregoing detailed description has been provided by way of explanation and illustration and is not intended to limit the scope of the appended claims. Many variations in the presently preferred embodiments illustrated herein will be apparent to one of ordinary skill in the art and remain within the scope of the appended claims and their equivalents.

## Claims

1. A method of manufacturing an alkaline-earth-metal-sulfate-loaded support material, the method comprising:
providing a first slurry comprising a support material, alkaline-earth-metal ions and an organic compound, wherein the organic compound comprises a functional group selected from a sulfo group (-SO₃H), a sulfonyl group (-S(=O)₂-) and a sulfinyl group (-S(=O)-);
spray drying the first slurry to provide a spray-dried powder; and
heating the spray-dried powder to form an alkaline-earth-metal-sulfate-loaded support material.

2. The method of claim 1, wherein the first slurry is substantially free of platinum group metals.

3. The method of claim 1 or claim 2, wherein the first slurry consists essentially of, preferably consists of, the support material, the alkaline-earth-metal ions, the organic compound, and optionally a counterion for the alkaline-earth-metal ions.

4. The method of any preceding claim, wherein the first slurry is an aqueous slurry.

5. The method of any preceding claim, wherein the organic compound comprises one or more of aminomethanesulfonic acid, taurine, homotaurine, 4-aminobutane-1-sulfonic acid, 2-aminopropane-1-sulfonic acid, 2-methyltaurine, dimethyl sulfone, sulfonane, cysteic acid, dimethyl sulfoxide and aminobenzenesulfonic acid, preferably taurine.

6. The method of any preceding claim, wherein the alkaline-earth-metal ions comprise one or more of calcium ions, strontium ions and barium ions, preferably strontium and/or barium ions, more preferably barium ions.

7. The method of any preceding claim, wherein the support material comprises one or more of alumina, silica, titania, ceria, zirconia, a ceria-zirconia mixed oxide, vanadia, lanthana and zeolites.

8. The method of any preceding claim, wherein heating the spray-dried powder comprises heating the spray-dried powder.

9. An alkaline-earth-metal-sulfate-loaded support material obtained or obtainable by the method of any of the preceding claims.

10. The alkaline-earth-metal-sulfate-loaded support material of claim 9, wherein the alkaline-earth-metal-sulfate-loaded support material comprises from 1 to 25 wt.% of the alkaline-earth-metal sulfate, based on the total weight of the alkaline-earth-metal-sulfate-loaded support material, preferably from 2 to 20 wt.% or from 5 to 20 wt.%

11. The alkaline-earth-metal-sulfate-loaded support material of claim 9 or claim 10, wherein the alkaline-earth-metal sulfate comprises nanoparticles of the alkaline-earth-metal sulfate having a crystallite size of from 0.1 nm to 30 nm, preferably from 5 to 25 nm or 5 to 20 nm.

12. A method of manufacturing a catalyst article, the method comprising:
manufacturing an alkaline-earth-metal-sulfate-loaded support material according to the method of any of claims 1 to 8 or providing an alkaline-earth-metal-sulfate-loaded support material according to any of claims 9 to 11;
providing a second slurry comprising the alkaline-earth-metal-sulfate-loaded support material and platinum group metal ("PGM") ions;
disposing the second slurry on a substrate; and
heating the second slurry to form PGM nanoparticles on the alkaline-earth-metal-sulfate-loaded support material.

13. The method of claim 12, wherein the second slurry is an aqueous slurry.

14. The method of claim 12 or claim 13, wherein the substrate is in the form of a flow through monolith or a wall flow filter.

15. A catalyst article comprising:
a substrate; and
a first catalytic region disposed on the substrate;
wherein the first catalytic region comprises a support material having loaded thereon PGM (such as Pd) nanoparticles and alkaline-earth-metal-sulfate nanoparticles;
wherein the alkaline-earth-metal-sulfate nanoparticles are evenly distributed within the first catalytic region.

16. The catalyst article of claim 15, wherein the alkaline-earth-metal-sulfate-loaded support material is present in a first catalytic region, and the catalyst article further comprises a second catalytic region; and
wherein the second catalytic region comprises palladium, platinum and/or rhodium.

17. The catalyst article of claim 16, wherein the first catalytic region forms a first layer on the substrate and the second catalytic region forms a second layer on the substrate, the first layer extending from a first end of the substrate and the second layer extending from a second end of the substrate, preferably wherein first and second catalytic regions are each disposed directly onto the substrate.

18. The catalyst article of claim 16 or claim 17 further comprising a third catalytic region, wherein the second catalytic region comprises palladium and/or platinum; and optionally
wherein the third catalytic region comprises rhodium and is disposed on top of the first catalytic region and/or the second catalytic region such that the first and/or second catalytic regions are each located between the third catalytic region and the substrate.

19. An emission treatment system comprising the catalyst article of any of claims 15 to 18.
